Europäisches Patentamt

European Patent Office

Office européen des brevets

(11) Numéro de publication: **0 215 497 B1**

# FASCICULE DE BREVET EUROPEEN

(45) Date de publication de fascicule du brevet:
09.10.91

(51) Int. Cl.⁵: **G06F 15/336**

(21) Numéro de dépôt: **86201305.9**

(22) Date de dépôt: **23.07.86**

(54) **Dispositif d'autocorrélation.**

(30) Priorité: **13.08.85 FR 8512337**

(43) Date de publication de la demande:
**25.03.87 Bulletin 87/13**

(45) Mention de la délivrance du brevet:
**09.10.91 Bulletin 91/41**

(84) Etats contractants désignés:
**DE FR GB**

(56) Documents cités:
**US-A- 4 080 660**

**IBM TECHNICAL DISCLOSURE BULLETIN, vol. 20, no. 2, juillet 1977, pages 590-592, New York, US; P.A. CARDENIA et al.: "Registration by digital cross correlation"**

(73) Titulaire: **TRT TELECOMMUNICATIONS RADIOELECTRIQUES ET TELEPHONIQUES
88 rue Brillat Savarin
F-75013 Paris(FR)**

(84) Etats contractants désignés:
**FR**

Titulaire: **N.V. Philips' Gloeilampenfabrieken**

**Groenewoudseweg 1
NL-5621 BA Eindhoven(NL)**

(84) Etats contractants désignés:
**DE GB**

(72) Inventeur: **Héthuin, Serge c/o Société Civile S.P.I.D.
209 rue de l'Université
F-75007 Paris(FR)**
Inventeur: **Crepin, Hughes c/o Société Civile S.P.I.D.
209 rue de l'Université
F-75007 Paris(FR)**
Inventeur: **Fauret, Jérôme c/o Société Civile S.P.I.D.
209 rue de l'Université
F-75007 Paris(FR)**

(74) Mandataire: **Chaffraix, Jean et al
Société Civile S.P.I.D. 156, Boulevard Haussmann
F-75008 Paris(FR)**

EP 0 215 497 B1

**Description**

La présente invention concerne un dispositif d'autocorrélation pour fournir N valeurs d'autocorrélation R-(k) (k = 0,...,N - 1) d'une fonction d'autocorrélation d'une succession d'échantillons numériques x(n) (n = -∞, ..., 0,... p) d'un signal d'entrée, codés avec "b" éléments binaires, chaque valeur R(k) étant définie par la formule :

$$R(k) = \sum_{n=p-M+1}^{n=p} x(n).x(n - k)$$

où M est le nombre d'échantillons à partir desquels chaque valeur R(k) doit être déterminée.

Un tel dispositif trouve d'importantes applications dans le traitement du signal, notamment dans les techniques d'analyse spectrale.

Dans la demande de brevet britannique GB-A-2 051 435 il est décrit un tel dispositif d'autocorrélation ; dans ce dispositif connu, le premier registre est un registre à décalage et le deuxième est formé par un ensemble de compteur.

Ce dispositif connu n'est pas très adapté pour être réalisé sous forme intégrée. En effet la présence de registres à décalage impose une surface importante de la plaquette de silicium sur laquelle on veut réaliser l'intégration. Généralement on estime que pour traiter un élément binaire par un registre à décalage il faut compter une douzaine de transistors en technologie C.MOS.

Pour économiser cette surface on peut utiliser des mémoires, commandées par un organe d'adressage et de séquencement commun. Ces mémoires prennent moins de surface, puisqu'on estime que quatre transistors suffisent pour le traitement d'un élément binaire. Ceci est décrit dans le brevet des Etats-Unis d'Amérique, U-S-A-4 080 660 où deux mémoires sont utilisées, l'une pour emmagasiner des échantillons d'un premier signal, l'autre pour des échantillons d'un deuxième signal. Cependant, le circuit décrit dans ce brevet n'est pas conçu pour effectuer des corrélations et présente donc l'inconvénient que chaque coefficient d'autocorrélation doit être calculé un par un à partir des valeurs enregistrées dans les deux mémoires, ce qui implique une perte de temps souvent préjudiciable lorsqu'on travaille en temps réel.

La présente invention telle que revendiquée dans la revendication 1, propose un dispositif du genre mentionné, facilement intégrable, et qui ne présente pas l'inconvénient d'occuper trop de place sur le substrat de circuit intégré et qui permet d'obtenir rapidement tous les coefficients d'autocorrélation.

Pour cela, un tel dispositif est remarquable en ce qu'il comporte au moins un bloc, chaque bloc comprenant :

- une mémoire de type à accès aléatoire pour y stocker, à des adresses respectives, une pluralité de mots, où chaque mot de cette mémoire est la concaténation d'un mot représentant une valeur d'autocorrélation et d'un mot représentant la valeur d'un échantillon, cette mémoire étant munie d'une première entrée et d'une première sortie pour mots d'échantillon et d'une seconde entrée et une seconde sortie pour mots d'autocorrélation, et

- des moyens de traitement munis d'une première et une deuxième entrée couplées respectivement à ladite première et seconde sortie de ladite mémoire, d'une troisième entrée pour recevoir des mots d'échantillon d'une entrée de report d'une première et d'une deuxième sortie couplées respectivement à ladite première et deuxième entrée de la mémoire, et d'une sortie de report, où l'entrée de report du premier bloc reçoit l'échantillon et où l'entrée de report de chaque bloc suivant est connectée à la sortie de report du bloc précédent, la première entrée des moyens de traitement étant reliée à la sortie de report, ces moyens de traitement comprenant un multiplicateur, un organe d'addition et un commutateur à deux entrées, les entrées du commutateur étant reliées à la première entrée des moyens de traitement et à l'entrée de report, la sortie du commutateur étant reliée à une entrée du multiplicateur et à la première entrée de la mémoire, le multiplicateur multipliant les mots d'échantillon reçus à la troisième entrée des moyens de traitement avec les mots d'échantillon à la sortie du commutateur et l'organe d'addition additionnant les produits à la sortie du multiplicateur aux mots d'autocorrélation reçus de la seconde sortie de ladite mémoire afin de déterminer des mots d'autocorrélation supplémentaires, ces mots d'autocorrélation supplémentaires étant fournis par ledit organe additionneur à la seconde entrée de la mémoire pour y être stockés, ledit dispositif comprenant en outre :

- un organe d'adressage de mémoire et de séquencement pour fournir les mots d'échantillonnage à l'entrée de report du premier bloc et à la troisième entrée desdits moyens de traitement de chaque

2

bloc, cet organe d'adressage et de séquencement fournissant des cycles pour des adresses de lecture et d'écriture à ladite mémoire de chaque bloc pour y stocker et lire des mots d'échantillon et des mots d'autocorrélation en conformité avec la formule ci-dessus, tandis que les valeurs R(k) sont stockées dans la mémoire de chaque bloc et peuvent être lues sur la seconde sortie, ladite seconde sortie de la mémoire de chaque bloc étant la sortie dudit dispositif d'autocorrélation.

Selon une caractéristique importante de l'invention, un dispositif d'autocorrélation est remarquable en ce qu'il est constitué par un ensemble d'au moins un bloc comportant chacun une mémoire du type précité, un organe de multiplication, un organe d'addition, un premier registre pour emmagasiner les échantillons à la sortie de la mémoire et pour les fournir à l'organe de multiplication, via un commutateur à deux entrées, un deuxième registre pour emmagasiner l'échantillon à la sortie de la mémoire adressée par le dernier code du cycle d'adressage de l'organe d'adressage et pour le fournir à une sortie de report et en ce que l'entrée du commutateur non reliée à la sortie du premier registre est reliée à une entrée de report.

Selon cette caractéristique, le dispositif d'autocorrélation peut être réalisé par plusieurs blocs de même structure, ce qui est praticulièrement avantageux pour la réalisation sous forme intégrée. En outre, on peut choisir le nombre de blocs en fonction du nombre de valeurs d'autocorrélation que l'on souhaite.

La description suivante faite en regard des dessins annexés, le tout donné à titre d'exemple non limitatif, fera bien comprendre comment l'invention peut être réalisée.

La figure 1 montre un dispositif d'autocorrélation conforme à l'invention.

Les figures 2 et 3 montrent des diagrammes temps destinés à l'explication du fonctionnement du dispositif de la figure 1.

La figure 4 montre le détail de réalisation d'un organe d'adressage et de séquencement d'une part, et d'un circuit de lecture d'autre part, le tout convenant pour le dispositif d'autocorrélation de la figure 1.

Les figures 5 et 6 montrent des diagrammes temps destinés à l'explication du fonctionnement de l'organe et du circuit représentés à la figure 4.

La figure 7 montre le détail de réalisation d'un organe de multiplication convenant pour le dispositif d'autocorrélation de la figure 1.

Le dispositif d'autocorrélation que l'on va décrire est prévu pour fournir 128 valeurs d'autocorrélation

$$(1) \qquad R(k) = \sum_{n=p-M+1}^{n=p} x(n).x(n - k)$$

où k = 0, 1,...127

et x(n) représente l'échantillon reçu le plus récemment et à partir duquel le calcul de la formule est exécuté. Les échantillons sous forme numérique sont transmis sur une ligne 10. Les valeurs d'autocorrélation sont transmises à l'utilisateur par l'intermédiaire d'une borne 20. Pour pouvoir effectuer les opérations indiquées par la formule (1) il faut pouvoir enregistrer d'une part N échantillons antérieurs à l'échantillon x-(n) pour que le cumul entre p et p-M + 1 puisse se faire et aussi d'autre part les valeurs R(k) pour qu'elles soient mises à jour pour chaque nouvel échantillon reçu. Conformément à l'invention, on a prévu au moins une mémoire 30 du type à accès aléatoire organisée en mots dont chacun est la concaténation d'un mot représentant une valeur d'autocorrélation R(k) et d'un mot représentant l'échantillon x(n-k-1) et l'on a prévu aussi un organe d'adressage et de séquencement 40 pour élaborer un cycle d'adressage de 16 codes d'adressage AD pour chaque échantillon reçu et pour commander par des signaux E, HP, HBP, TØ et PE les opérations indiquées à la formule (1).

Pour chacun desdits mots, l'entrée de la mémoire 30 est divisée en deux groupes d'entrées EIN et RIN et la sortie en deux groupes de sorties EOUT et ROUT affectés respectivement aux échantillons et aux valeurs d'autocorrélation. Dans cet exemple décrit, un cycle d'adressage consiste à fournir seize codes d'adresse AD correspondant à la capacité de la mémoire 30 et pour chaque code on prévoit un temps de lecture pour considérer les mots aux sorties EOUT et ROUT et un temps d'écriture pour emmagasiner les mots présents aux entrées EIN et RIN. Ces temps sont définis par les signaux HP appliqués à l'entrée de commande lecture-écriture WE de la mémoire 30. Ceci sera décrit plus en détail dans la suite du présent mémoire. La multiplication et l'opération de cumul indiquées par la formule (1) sont effectuées d'une part, par un organe de multiplication 50 et d'autre part, par un organe d'addition 60. La sortie de l'organe d'addition 60 est reliée à un circuit de porte ET 62 pour être reliée à un registre tampon 65 si un signal E de valeur convenable est appliqué au circuit de porte 62. Pour que le signal de sortie du circuit 62 soit enregistré il faut appliquer un signal HBP à la commande d'enregistrement du registre tampon 65. Les sorties de ce registre 65 sont reliées à l'entrée RIN de la mémoire 30. L'organe d'addition 60 est muni de deux entrées dont l'une est reliée à la sortie ROUT et l'autre à la sortie de l'organe de multiplication 50. L'organe de multiplication 50 est muni de deux entrées ; l'une est reliée à une borne EN et l'autre à la sortie d'un commutateur 70 à deux positions qui sont commandées par les signaux TØ. Ce commutateur est muni de deux accès d'entrée dont un est relié à une borne ECA et l'autre à la sortie d'un circuit registre 75 formé de deux registres en cascade dont les commandes d'enregistrement reçoivent les signaux HBP et HP de sorte que ce registre apporte un retard égal au temps qui sépare les valeurs actives de ces signaux HBP et HP. L'accès de sortie de ce commutateur est relié, outre à l'entrée de l'organe de multiplication 50, à l'entrée EIN de la mémoire 30. La sortie ROUT de la mémoire 30 est reliée, outre à une entrée de l'organe d'addition 60, à une borne RRO. On a prévu aussi un registre 77 dont la sortie est reliée à une borne SCA et l'entrée à la sortie EOUT de la mémoire 30. La commande d'enregistrement de ce registre 77 reçoit le signal PE.

Ce que l'on vient de décrire constitue un bloc d'autocorrélation BL0 fournissant les valeurs R(0) à R(15). Pour fournir les autres valeurs on a prévu sept autres blocs BL1 à BL7 dont la structure est rigoureusement identique à celle du bloc BL0. Le bloc BL1 traite les valeurs d'autocorrélation R(16) à R(31), le bloc BL2 R(32) à R(47) et ainsi de suite jusqu'au bloc BL7 prévu pour traiter les valeurs R(112) à R(127). Ces blocs sont interconnectés de la manière suivante. Toutes les bornes EN sont connectées à la ligne 10 ; la borne ECA du bloc BL0 est connectée à la ligne 10, tandis que les bornes ECA des autres blocs sont connectées aux bornes SCA du bloc précédent. Ainsi la borne ECA du bloc BL1 est connectée à la borne SCA du bloc BL0,..., la borne ECA du bloc BL7 à la borne SCA du bloc BL6 (non représenté). Il est à noter que la borne SCA du bloc BL7 n'a pas à être connectée. Les bornes ECA et SCA constituent, en quelque sorte, des entrées et des sorties de report pour un échantillon qui sort d'un bloc pour aller au suivant. Un circuit de lecture 85 commandé par l'organe d'adressage et de séquencement 40 permet de fournir sur la borne 20 les différentes valeurs R(k).

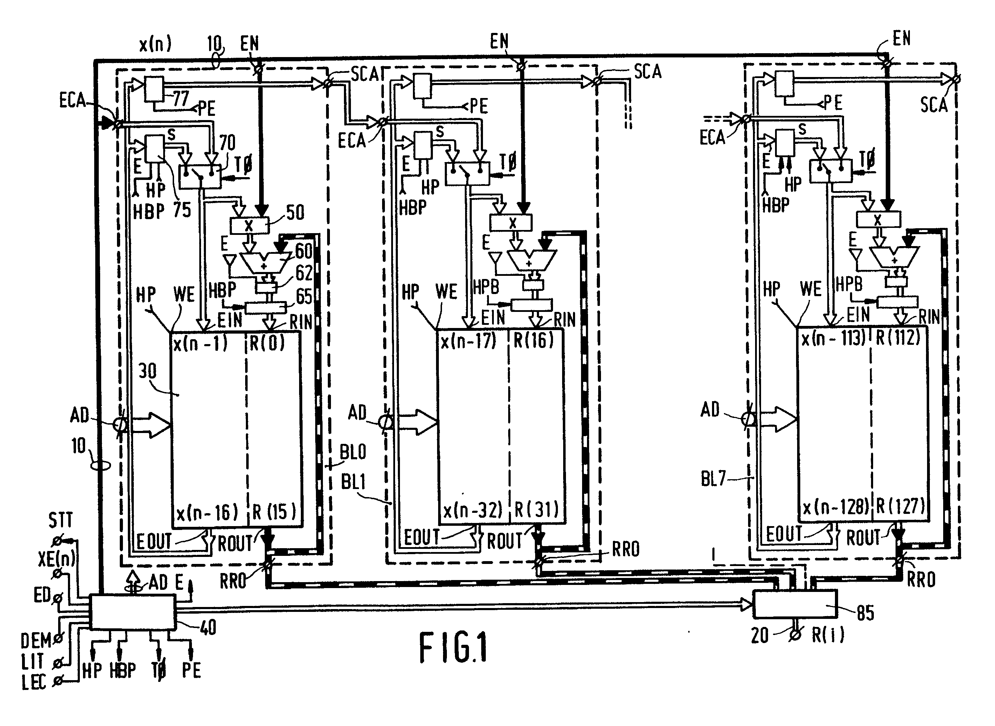

On peut maintenant expliquer dans ses grandes lignes le fonctionnement du dispositif d'autocorrélation de la figure 1.

Tout d'abord, on se place dans les conditions mentionnées sur la figure 1. C'est-à-dire que :
- l'on se place à l'instant "n" où l'échantillon de signal x(n) est disponible sur la ligne 10,
- dans la mémoire 30 du bloc BL0 est déjà rangé à l'adresse "0" le mot formé de l'échantillon x(n - 1) et la valeur d'autocorrélation R(0), à l'adresse "1" l'échantillon x(n - 2) et R(1) et ainsi de suite jusqu'à l'adresse "15" où l'échantillon x(n - 16) et la valeur R(15) sont enregistrés,
- dans la mémoire 30 du bloc BL1 à l'adresse "0" sont enregistrés x(n - 17) et R(16)

   .

   .

- dans la mémoire 30 du bloc BL1 à l'adresse "15" (ou "F" en numérotation hexadécimale), sont enregistrés x(n - 32) et R(31),
- ceci ainsi de suite jusqu'au bloc BL7 où dans sa mémoire 30,


   à l'adresse "0" sont enregistrés x(n - 113) et R(112)


   .


   .


   à l'adresse "15" (ou "F" en numérotation hexadécimale) sont


enregistrés x(n - 128) et R(127).

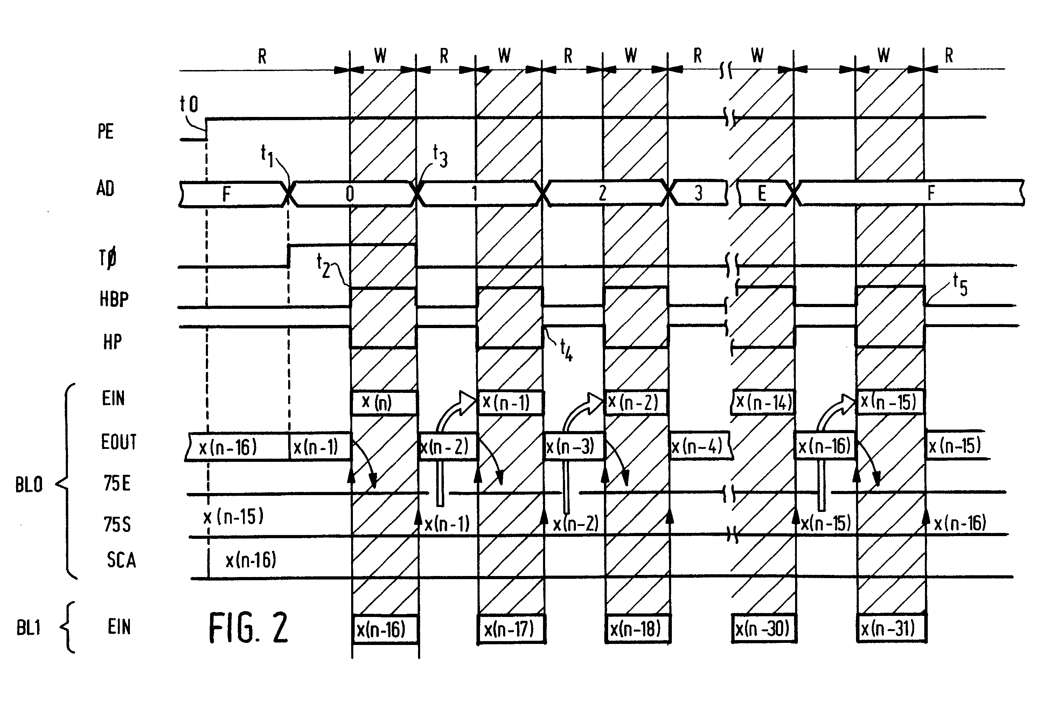

Maintenant on explique à l'aide de la figure 2 le cheminement des échantillons x(n - i) à l'intérieur des mémoires 30 des différents blocs BL0 à BL7.

Lorsqu'un échantillon nouveau (soit l'échantillon x(n)) apparaît à la borne 10, dont la présence est signalée par un signal ED, à l'instant tO (figure 2), le signal PE fourni par l'organe d'adressage et de séquencement 40, prend la valeur "1". A cet instant toutes les mémoires sont en position LECTURE (repérée par R sur la figure 2), le signal HP ayant la valeur "1". Le code d'adressage appliqué aux entrées AD de tous les blocs BL0 à BL7 est "F" de sorte qu'à la sortie EOUT de la mémoire 30 du bloc BL0 on a l'échantillon x(n - 16) qui est enregistré dans le registre 77. Il est alors facile de se rendre compte que les registres 77 des blocs suivants BL1, BL2,..BL6 contiennent x(n - 32), x(n - 48),... x(n - 112). Puis à l'instant t1 l'organe 40 engendre le code d'adresse "0" et net à l'état actif le signal TØ de sorte que la sortie des commutateurs 70 est mise en relation avec l'entrée ECA à l'intérieur de tous les blocs BL0 à BL7. Les mémoires sont en position LECTURE "R" de sorte qu'à leur sortie on a, respectivement pour les blocs BL0

4

et BL1, les échantillons x(n - 1) et x(n - 17). Survient l'instant t2 où le signal HP prend la valeur "0" et le signal HBP la valeur "1" (HBP = $\overline{HP}$) c'est-à-dire que les mémoires 30 sont mises en position ECRITURE ce qui est repéré sur la figure 2 par une zone hachurée W.

Les mémoires des blocs BL0, BL1,... BL7 enregistrent donc respectivement à l'adresse "0" les échantillons x(n), x(n - 16),..., x(n - 112), ces échantillons provenant respectivement de la ligne 10 et des sorties des registres 77 des blocs BL0 et BL6. Le front montant du signal HBP provoque l'enregistrement dans l'organe de retard 75 des échantillons qui étaient disponibles à la sortie EOUT. L'organe 75 du bloc BL0 va enregistrer l'échantillon x(n - 1), l'organe 75 du bloc BL1 va enregistrer l'échantillon x(n - 17),etc... et l'organe 75 du bloc BL7 l'échantillon x(n - 113).

Survient alors l'instant t3 où le code d'adressage devient "1" et où les mémoires sont mises en position LECTURE. Le signal TØ prend à cet instant t3 la valeur "0" ce qui implique que les sorties des commutateurs 70 de tous les blocs BL0 à BL7 sont mises en relation avec la sortie S de l'organe de retard 75. Le front montant du signal HP qui survient aussi à cet instant t3 provoque la sortie de l'échantillon emmagasiné à l'instant t2. Ainsi aux sorties S des organes 75 des blocs BL0, BL1,..., BL7 on a respectivement les échantillons x(n - 1), x(n - 17),... x(n - 113) tandis qu'aux sorties EOUT des mémoires 30 de ces mêmes blocs on a x(n - 2), x(n - 18), ..., x(n - 114). Donc, à l'instant t4 qui survenant au moment où le signal HP prend la valeur "0", les échantillons x(n - 2), x(n - 18),... x(n - 114) vont être emmagasinés dans les organes 75 et les échantillons x(n - 1), x(n - 17), ..., x(n - 113) vont être inscrits dans les mémoires à l'adresse "1". Ainsi grâce à l'organe de retard 75, à la fin d'un cycle d'adressage qui survient à l'instant t5, tous les échantillons vont être décalés d'une ligne vers le bas.

Après l'instant t5 le dispositif est mis en phase d'attente d'un nouvel échantillon. Dans cette phase d'attente, l'adresse reste fixée à "F", le signal HP garde la valeur "1" c'est-à-dire que les mémoires 30 sont mises en position LECTURE.

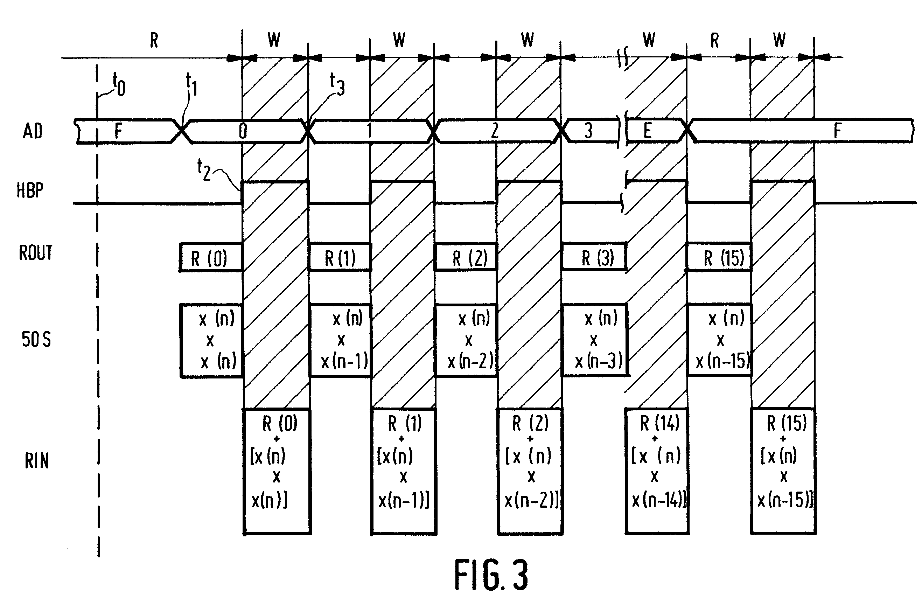

Dans ce qui suit on explique à l'aide de la figure 3 la formation des différentes valeurs d'autocorrélation. Sur cette figure les instants t0, t1, t2, t3 correspondent à ceux portés sur la figure 2. Après l'instant t0 où l'échantillon x(n) est signalé comme étant disponible sur la ligne 10, survient l'instant t1 où le code d'adresse est "0" ; à la sortie ROUT de la mémoire 30 du bloc BL0, on a donc la valeur R(0) qui est appliquée à l'une des entrées de l'organe d'addition 60 tandis qu'à l'autre entrée on a le résultat de la multiplication effectuée par l'organe 50, c'est-à-dire le produit des échantillons disponibles aux entrées EN et ECA : pour le bloc BL0 le produit est x(n).x(n), pour le bloc BL1 : x(n).x(n - 16),..., pour le bloc BL7 : x(n).x(n - 112). Ceci est indiqué uniquement pour le bloc BL0 à la ligne 50S de la figure 3. A l'instant t3 le code d'adresse prend la valeur "1" ce qui fait que l'organe de multiplication 50 effectue le produit entre l'échantillon disponible à la borne EN (ou sur la ligne 10) et l'échantillon à la sortie de l'organe de retard 75. Pour le bloc BL0 ce produit est donc x(n).x(n - 1), pour le bloc BL1, x(n).x(n - 17),..., pour le bloc BL7, x(n).x(n - 114). Ce produit va venir s'accumuler avec les valeurs R(1), R(17),..., R(114) et ceci ainsi de suite jusqu'à ce que le code d'adresse atteigne "F". La manière dont sont prélevées les différentes valeurs R(i) sera décrite lors de l'explication du fonctionnement de l'organe de lecture 85.

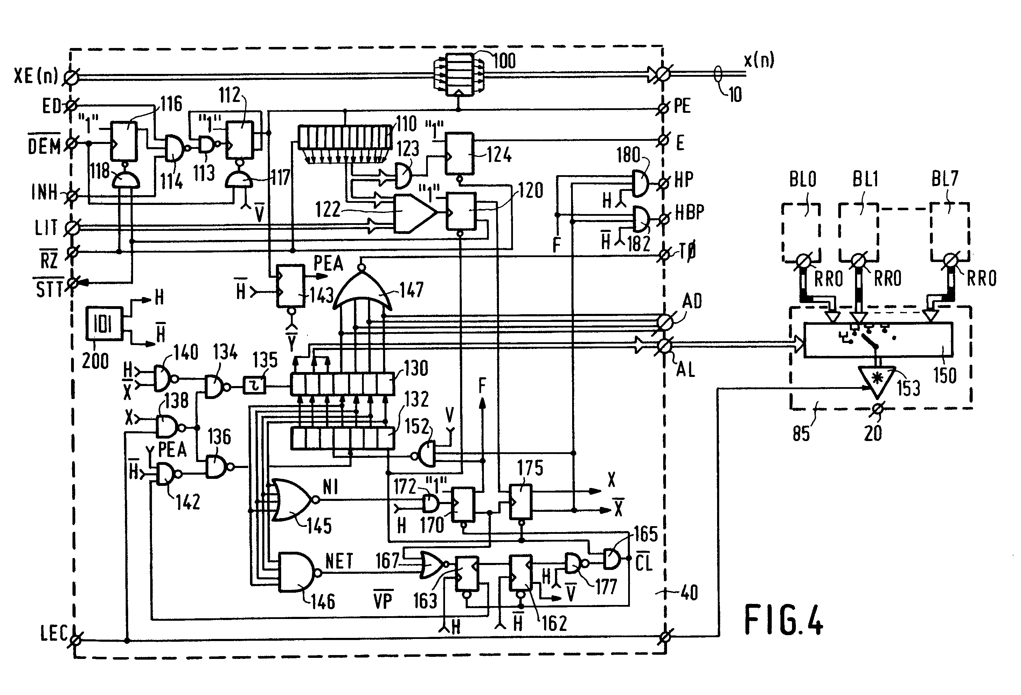

On décrit en détail l'organe d'adressage et de séquencement 40 montré à la figure 4. Cet organe est muni de plusieurs accès d'entrée destinés à être raccordés à des circuits extérieurs ; un premier accès est prévu pour recevoir l'échantillon d'entrée XE(n) ; avant d'être transmis sur la ligne 10, cet échantillon XE(n) transite dans un registre 100. L'échantillon prend alors à la sortie de ce registre 100 la référence x(n). L'échantillon XE(n) est validé par un signal ED. L'organe 40 ne peut fonctionner que si l'on met à l'état actif le signal $\overline{DEM}$ après toutefois avoir fait une mise à zéro au moyen d'un signal $\overline{RZ}$. L'organe 40 cesse d'effectuer les opérations de corrélation lorsque le nombre d'échantillons que l'on a traité devient égal à un nombre LIT que l'on se fixe au préalable, les valeurs typiques allant de la centaine au millier. Pour mettre en oeuvre le circuit de lecture on rend actif un signal LEC. Il faut cependant, avant de rendre actif ce signal LEC, tester un signal $\overline{STT}$ qui indique que le calcul des valeurs d'autocorrélation est terminé.

L'organe 40 comporte tout d'abord un compteur d'échantillon 110 qui est muni d'une entrée de remise à zéro recevant le signal $\overline{RZ}$ et dont la valeur s'incrémente sur chaque front actif du signal PE. Ce même front commande l'enregistrement dans le registre 100. Le signal PE est fourni par une bascule 112 de type D. La sortie $\overline{Q}$ de cette bascule est reliée à une entrée d'une porte NON-ET 113 à deux entrées. L'autre entrée de cette porte 113 est reliée à la sortie d'une porte NON-ET 114 à trois entrées. La première entrée de cette porte 114 reçoit le signal ED, la deuxième un signal INH pour empêcher la prise en compte d'échantillons non désirés et la troisième est reliée à la sortie Q d'une bascule 116 de type D. L'entrée D de cette bascule 116 reçoit en permanence un signal logique de valeur "1" et l'entrée de basculement reçoit le signal $\overline{DEM}$ qui est appliqué aussi à la remise à zéro de la bascule 112 par l'intermédiaire d'une porte ET 117. Cette porte à deux entrées reçoit, outre le signal $\overline{DEM}$, un signal $\overline{V}$. La remise à zéro de la bascule 116 est provoquée par le signal de sortie d'une porte ET 118, à deux entrées. Une de ces entrées

reçoit le signal $\overline{RZ}$ et l'autre le signal $\overline{STT}$ provenant de la sortie Q d'une bascule 120 de type D. L'entrée D de cette bascule 120 reçoit en permanence un signal logique de valeur "1", et son entrée de remise à zéro le signal $\overline{RZ}$. L'entrée de basculement est reliée à la sortie d'un comparateur de codes 122. Ce comparateur effectue la comparaison entre le code contenu dans le compteur d'échantillons 110 et le code LIT. Un décodeur 123 décode une position intermédiaire du compteur 110. Une bascule 124 enregistre le passage de cette position intermédiaire et fournit ainsi le signal E. L'entrée D de cette bascule reçoit en permanence un signal logique "1" et son entrée de remise à zéro reçoit le signal $\overline{RZ}$. Les codes AD proviennent d'un registre 130 destiné à enregistrer le contenu QQ d'un compteur 132 à sept positions, sous la commande d'un signal fourni par une porte NON-ET 134, via un organe 135 amenant un petit retard dont l'ordre de grandeur est celui du temps de passage d'un signal au travers d'une porte. Ce compteur 132 est muni d'une entrée de remise à zéro recevant le signal $\overline{RZ}$. Une porte NON-ET 136 fournit les signaux d'incrémentation pour ce compteur 132. Le signal de sortie d'une porte NON-ET 138 est appliqué à l'une des deux entrées des portes 134 et 136. L'autre entrée de la porte 134 est reliée à la sortie d'une porte NON-ET 140 et l'autre entrée de la porte 136, à la sortie d'une porte NON-ET 142. La porte NON-ET 140 reçoit sur ses entrées des signaux H et $\overline{X}$, la porte NON-ET 138, les signaux X et LEC, la porte NON-ET 142 les signaux PEA, $\overline{H}$ et $\overline{VP}$. Le signal PEA provient d'une bascule de type D 143 dont l'entrée D reçoit le signal PE, dont l'entrée de basculement reçoit le signal $\overline{H}$ et dont l'entrée de remise à zéro reçoit le signal $\overline{V}$. Différents décodeurs 145, 146 et 147 sont rattachés au compteur 132 et au registre 130. Le décodeur 145 est constitué par une porte NON-OU dont les quatre entrées sont reliées aux quatre positions de plus faible poids du compteur 132 et qui fournit un signal NI. Le décodeur 146 est constitué par une porte NON-ET dont les quatre entrées sont reliées aussi aux quatre positions de plus faible poids du compteur 132 et qui fournit un signal NET. Le décodeur 147 est constitué par une porte NON-OU dont les quatre entrées sont reliées à des sorties du registre 130 correspondant aux quatre positions de plus faible poids du compteur 132 et qui fournit le signal TØ. C'est aussi à ces sorties du registre 130 que le code AD est prélevé. On peut noter dès maintenant que les positions du compteur 132 contenant les éléments binaires de plus fort poids sont utilisées, via le registre 130, pour la commande du multiplixeur de sortie 150 faisant partie du circuit de lecture 85. Le compteur 132 est divisé en deux parties ; chacune de ces parties peut être reinitialisée d'une manière indépendante, c'est-à-dire que toutes les positions de ces parties de compteur sont mises à "1". La partie relative aux quatre positions de plus faible poids peut être mise à "1" par le signal $\overline{RZ}$ ; la partie relative aux trois positions de plus fort poids, par le signal de sortie d'une porte NON-ET 152 munie de trois entrées pour recevoir respectivement les signaux V, F et $\overline{X}$. Le signal V est le signal à la sortie Q d'une bascule 162 de type D ; l'entrée D de cette bascule reçoit le signal VP apparaissant à la sortie Q d'une autre bascule 163 de type D. L'entrée de basculement de la bascule 162 reçoit le signal $\overline{H}$ et son entrée de remise à zéro, le signal $\overline{CL}$ fourni par une porte ET 165. L'entrée D de la bascule 163 est reliée à la sortie d'une porte NON-OU 167 et l'entrée de basculement reçoit le signal H, son entrée de remise à zéro reçoit le signal $\overline{CL}$. Une des deux entrées de la porte 167 reçoit un signal NET qui est fourni par la porte de décodage 146, l'autre entrée le signal $\overline{F}$ qui apparaît à la sortie d'une bascule 170 de type D. Son entrée D reçoit en permanence un signal de valeur logique "1", son entrée de basculement est reliée à la sortie d'une porte ET 172 et son entrée de remise à zéro reçoit le signal CL. C'est sur sa sortie Q qu'apparaît le signal F. La porte ET 172 reçoit sur ses deux entrées le signal H et le signal NI élaboré par la porte de décodage 145. Le signal $\overline{F}$ est appliqué à l'entrée de basculement d'une bascule 175 de type D. L'entrée D de cette bascule 175 est reliée à la sortie Q de la bascule 120 pour recevoir le signal STT, l'entrée de remise à zéro reçoit le signal RZ. Aux sorties Q et $\overline{Q}$ de cette bascule 175 apparaissent les signaux X et $\overline{X}$. La porte 165 qui fournit le signal $\overline{CL}$ est munie de deux entrées dont l'une reçoit le signal $\overline{RZ}$ et dont l'autre est reliée à la sortie d'une porte NON-ET 177. Une des deux entrées de cette porte 177 reçoit le signal V de la sortie Q de la bascule 162 et l'autre le signal H. Deux portes ET 180 et 182 munies de trois entrées fournissent les signaux HP et HBP respectivement. Les signaux F et $\overline{X}$ sont appliqués à deux entrées de ces portes 180 et 182. Le signal H est appliqué à la troisième entrée de la porte 180 et le signal $\overline{H}$, à la troisième entrée de la porte 182. Un circuit d'horloge 200 fournit les signaux H et $\overline{H}$ complémentaires.

Le multiplexeur 150 faisant partie du circuit de lecture 85 est muni de huit entrées dont chacune est reliée à la sortie RRO des blocs BL0 à BL7 respectivement. La mise en relation d'une de ces entrées avec la sortie de ce multiplexeur 150 est déterminée par le code AL contenu dans les trois positions du registre 130 pour les éléments binaires de plus fort poids provenant du compteur 132. A la sortie de ce multiplexeur 150, on a prévu une série d'amplificateurs à trois états 153. Le code de sortie du multiplexeur ne peut être transmis à la borne 20 que si le signal LEC est actif, mettant ainsi les amplificateurs de la série 153 à l'état passant.

On peut expliquer maintenant le fonctionnement de l'organe d'adressage et de séquencement 40.

Ce fonctionnement comporte trois phases : une phase d'initialisation, une phase de calcul et une phase de lecture.

a) Phase d'initialisation

Dès que les signaux $\overline{RZ}$ et $\overline{DEM}$ ont été activés, les échantillons XE(n) peuvent survenir, accompagnés de leurs signaux d'activation ED. Ces signaux ED sont transmis à l'entrée de basculement de la bascule 112. La porte 114 étant ouverte : le signal à la sortie de la bascule 116 a la valeur "1" et l'on suppose que le signal INH a aussi la valeur "1". La porte 113 est aussi ouverte puisque la bascule 112 ayant été remise à zéro ; le signal sur sa sortie $\overline{Q}$ a la valeur "1". Comme on le verra par la suite la bascule 112 est remise à zéro avant l'apparition d'un nouvel échantillon de sorte que l'on peut admettre qu'à chaque apparition d'un échantillon correspond une valeur active du signal PE. Pendant toute cette phase d'initialisation le signal E reste inactif, c'est-à-dire qu'à l'entrée RIN des mémoires 30, on applique un signal de valeur "0" tandis que les échantillons reçus vont être emmagasinés progressivement dans toutes les mémoires 30 comme cela sera expliqué dans la phase suivante qui commence dès qu'un certain nombre d'échantillons dépasse un nombre détecté par le décodeur 123. Le signal E à la sortie de la bascule 124 passe à "1".

b) Phase de calcul

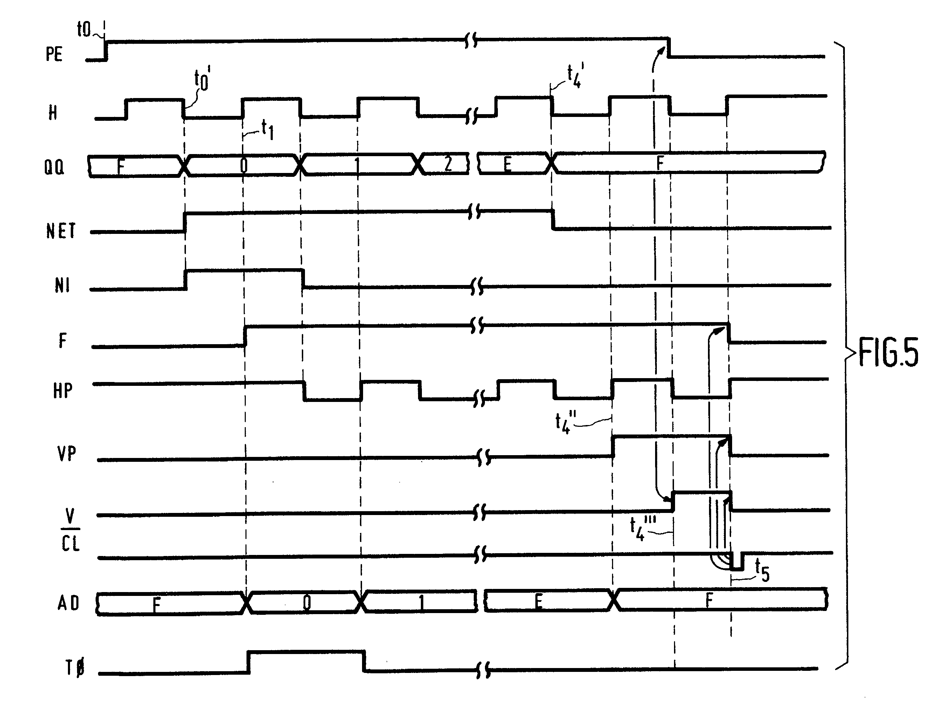

Tout d'abord, on explique à l'aide de la figure 5 comment est engendré le cycle d'adressage et les différents signaux pour le calcul et la mise à jour des différentes valeurs d'autocorrélation. On a reporté avec les mêmes références les instants indiqués aux figures 2 et 3. On considère maintenant à la figure 5 l'instant t0 correspondant à une montée du signal PE. Puis on se place à l'instant t0' où le signal $\overline{H}$ prend la valeur "1" ; ceci entraîne le basculement de la bascule 143, de sorte que le signal PEA prend la valeur "1", rendant "passante" la porte 142. Ainsi, la porte 142 et la porte 136 vont laisser passer le signal $\overline{H}$ pour que le contenu QO du compteur puisse s'incrémenter d'une unité à l'instant t0' correspondant à un front descendant du signal H. On admet que le contenu QQ (on ne considère pour l'instant que les quatre éléments binaires de faibles poids) était "F" avant l'instant t0', de sorte que le contenu devient après t0', "0". Puis à l'instant t1 ce contenu va être transféré dans le registre 130. Il convient de noter que le signal NET prend la valeur "1" pour QQ allant de O à E, que le signal NI prend la valeur "1" pour QQ = 0 et que le signal TØ prend la valeur "1" pour AD = 0. Cette valeur "1" de TØ provoque à l'intérieur des commutateurs 70 (figure 1) la mise en relation de leur sortie avec l'entrée ECA, l'instant t1 correspondant avec la montée du signal F, ce qui permet aux signaux HP et HBP de devenir actifs. Puis, chaque front descendant du signal H va provoquer l'incrémentation du contenu QQ qui va donc prendre les valeurs successives suivantes : "0", "1", "2",..., "E" et "F". On considère l'instant t4' où le code QQ prend la valeur "F". A cet instant le signal NET passe, de ce fait, à la valeur "0". La valeur du signal à la sortie de la porte 167 est "1" ; le front montant qui survient après à l'instant t4" provoque le passage à la valeur "1" du signal VP ce qui provoque, entre autres, la fermeture de la porte 142, le compteur 132 ne s'incrémente plus. Puis, à l'instant t4" ' défini par un front montant du signal $\overline{H}$ (c'est-à-dire un front descendant de H), la bascule 162 change d'état et le signal V prend la valeur "1". Ce passage à la valeur "1" provoque le basculement des bascules 112 et 143. Les signaux PE et PEA prennent la valeur "0". Comme le signal V a la valeur "1", la porte 177 est ouverte et lorsque la valeur H prend la valeur "1", à l'instant t5, le signal $\overline{CL}$ va devenir actif ce qui entraîne la mise à zéro des signaux F, VP et V et le signal CL redevient inactif. Après cet instant t5, on est prêt à traiter un nouvel échantillon.

c) Phase de lecture

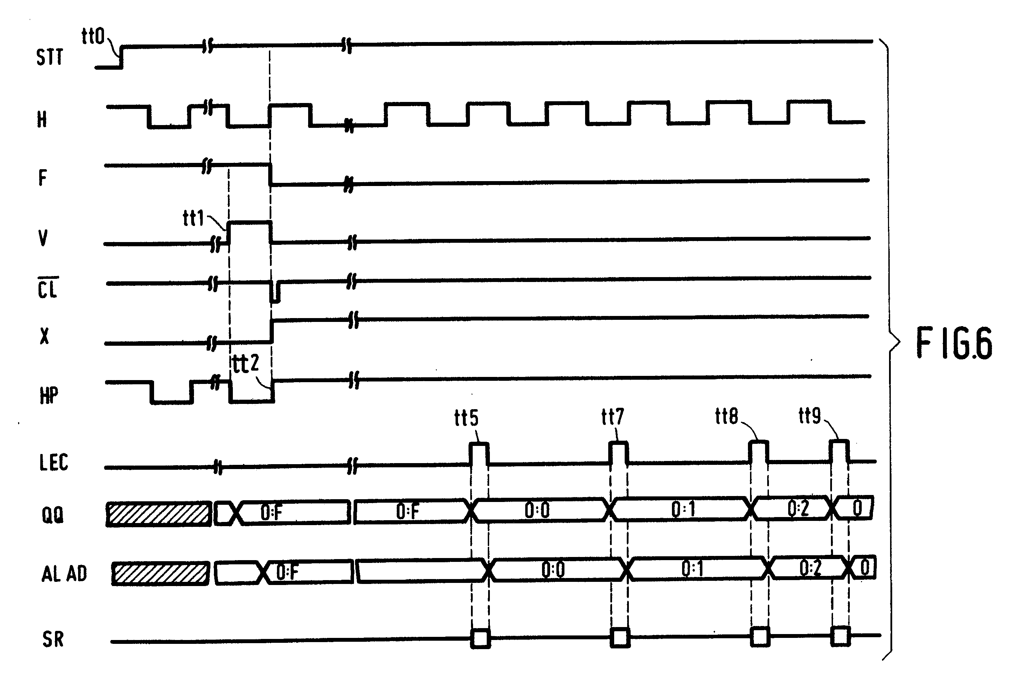

On se reporte à la figure 6. Pour que cette lecture puisse s'effectuer, il faut que le nombre d'échantillons traités comptés par le compteur 110 soit celui que l'on a préétabli au moyen du mot LIT. Ceci est détecté par le comparateur 122 qui, alors, provoque le changement d'état de la bascule 120, le signal STT prend la valeur "1" : soit tt0 à cet instant. Le signal complémentaire $\overline{STT}$ est appliqué à la remise à zéro de la bascule 116, bloquant ainsi la porte 114. L'arrivée de nouveaux échantillons ne sera plus dès lors considérée. Le même processus se déroule, pour ce dernier échantillon, comme pour les autres. Ce qui va changer, va survenir à l'instant tt1 où le signal V prend la valeur "1". Puis à l'instant tt2 le signal X prend la valeur "1", ceci étant déclenché par le front descendant du signal F et par le fait que le signal STT est appliqué à l'entrée D de la bascule 175. La valeur X = 1 permet l'évolution des trois bits de plus fort poids du compteur 132 ; ceux-ci peuvent donc s'incrémenter après chaque cycle d'adressage. A ce moment, les porte 180 et 182 sont bloquées et les signaux HP et HBP ne vont plus évoluer. De même, la porte 140 est bloquée et les signaux H ne pourront plus effectuer le transfert, dans le registre 130, du contenu du compteur 132 qui est "F". La lecture peut alors débuter ; il convient toutefois que l'utilisateur s'assure, avant de l'effectuer, que le signal $\overline{STT}$ ait la valeur voulue. On est alors en mode asynchrone et on lit au rythme des impulsions du signal LEC. A l'instant tt5, apparaît cette première impulsion. Le front montant de cette impulsion provoque l'incrémentation du compteur 132 qui passe donc à zéro puis après le retard amené par l'organe 135, le contenu du compteur 132 est transféré dans le registre 130.

Il convient de remarquer que c'est la deuxième impulsion survenant à l'instant tt7, lorsque le code adresse sur AD est égal à zéro, qui provoque à la sortie RR0 des mémoires 30 (figure 1) l'apparition des valeurs d'autocorrélation, calculées sur 11 éléments binaires, par exemple. Lors d'un premier cycle d'adressage où le code AL = 0, on trouvera sur la borne 20 le coefficient R(0) puis R(1)... jusqu'à R(15) ; ensuite le code AL prendra la valeur "1" et l'on obtiendra naturellement à la suite R(16), R(17)... et finalement on soutirera du dernier bloc BL7 les valeurs R(112) à R(127).

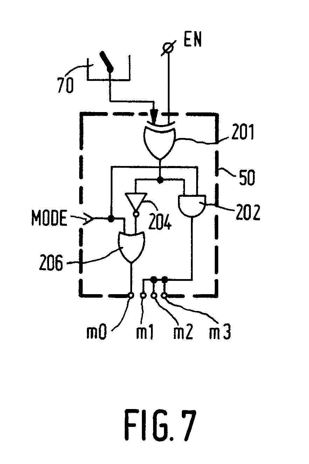

La réalisation d'une autocorrélation conforme à l'invention devient encore plus avantageuse lorsque l'échantillon est codé sur un seul élément binaire représentant son signe (+) ou (-). A la figure 7 on représente en détail la constitution d'un organe de multiplication 50 convenant bien pour ce cas.

Cet organe 50 est constitué à partir d'une porte OU-EXCLUSIF 201 dont les deux entrées sont les entrées pour opérande de cet organe. La sortie de cette porte 201 est reliée d'une part à l'une des deux entrées d'une porte ET 202 et d'autre part à l'entrée d'un inverseur 204 dont la sortie est reliée à l'une des deux entrées d'une porte OU 206. Les .deuxièmes entrées des portes 206 et 202 reçoivent un signal MODE dont l'intérêt sera explicité. La sortie de la porte OU 206 transmet l'élément de plus faible poids référencé par "m0" pour l'organe d'addition opérant par exemple sur des nombres à additionner de quatre bits, les trois derniers éléments binaires dont les références sont "m1, m2, m3" à considérer à la sortie de l'organe 50 étant pris tous les trois à la sortie de la porte 202.

Le mot à quatre éléments binaires appliqué à l'organe d'addition va être modifié en fonction de la valeur du signal MODE. On examine le cas où MODE = 0.

Lorsque les deux signaux aux entrées de la porte 201 ont même valeur, c'est-à-dire le même signe, le signal à la sortie de la porte 201 est "0", de sorte que le mot m3, m2, m1, m0 est "0001" et pour des signes différents on a "0000".

On examine le cas où MODE = 1.

Lorsque les deux signaux aux entrées ont le même signe, m3, m2, m1, m0 = 0001.

Lorsque les deux signaux aux entrées ont des signes différents, m3, m2, m1, m0 = 1111, ce qui correspond à - 1.

## Revendications

1. Dispositif d'autocorrélation pour fournir N valeurs d'autocorrélation R(k), (k = 0,..., N - 1) d'une fonction d'autocorrélation d'une succession d'échantillons numériques x(n) (n = - ∞,..., 0,...p) d'un signal d'entrée, codés avec "b" éléments binaires, chaque valeur R(k) étant définie par la formule :

$$R(k) = \sum_{n=p-M+1}^{n=p} x(n).x(n - k)$$

où M est le nombre d'échantillons à partir desquels chaque valeur R(k) doit être déterminée, ce dispositif comportant au moins un bloc (BL0,..,BL7), chaque bloc comprenant :
- une mémoire de type à accès aléatoire pour y stocker, à des adresses respectives, une pluralité de mots, où chaque mot de cette mémoire est la concaténation d'un mot représentant une valeur d'autocorrélation et d'un mot représentant la valeur d'un échantillon, cette mémoire étant munie d'une première entrée (EIN) et d'une première sortie (EOUT) pour mots d'échantillon et d'une seconde entrée (RIN) et une seconde sortie (ROUT) pour mots d'autocorrélation, et
- des moyens de traitement munis d'une première et une deuxième entrée couplées respectivement à ladite première (EOUT) et seconde (ROUT) sortie de ladite mémoire, d'une troisième entréen (EN) pour recevoir des mots d'échantillon d'une entrée de report (ECA) d'une première et d'une deuxième sortie couplées respectivement à ladite première (EIN) et deuxième (RIN) entrée de la mémoire, et d'une sortie de report (SCA), où l'entrée de report du premier bloc reçoit l'échantillon et où l'entrée de report de chaque bloc suivant est connectée à la sortie de report du bloc précédent, la première entrée des moyens de traitement étant reliée à la sortie de report (SCA), ces moyens de traitement comprenant un multiplicateur (50), un organe d'addition (60) et un commutateur (70) à deux entrées, les entrées du commutateur étant reliées à la première entrée des moyens de traitement et à l'entrée de report (ECA), la sortie du commutateur étant reliée à une entrée du multiplicateur (50) et à la première entrée de la mémoire, le multiplicateur (50) multipliant les mots d'échantillon reçus à la troisième entrée des moyens de traitement avec les mots d'échantillon à la sortie du commutateur (70) et l'organe d'addition additionnant les produits à la sortie du multiplicateur aux mots d'autocorrélation reçus de la seconde sortie de ladite mémoire afin de déterminer des mots d'autocorrélation supplémentaires, ces mots d'autocorrélation supplémentaires étant fournis par ledit organe additionneur à la seconde entrée de la mémoire pour y être stockés,

ledit dispositif comprenant en outre :

- un organe d'adressage de mémoire et de séquencement (40) pour fournir les mots d'échantillonnage à l'entrée de report (ECA) du premier bloc et à la troisième entrée (EN) desdits moyens de traitement de chaque bloc, cet organe d'adressage et de séquencement fournissant des cycles pour des adresses de lecture et d'écriture à ladite mémoire de chaque bloc pour y stocker et lire des mots d'échantillon et des mots d'autocorrélation en conformité avec la formule ci-dessus, tandis que les valeurs R(k) sont stockées dans la mémoire de chaque bloc et peuvent être lues sur la seconde sortie (ROUT), ladite seconde sortie de la mémoire de chaque bloc étant la sortie dudit dispositif d'autocorrélation.

2. Dispositif d'autocorrélation selon la revendication 1, caractérisé en ce qu'il est constitué par un ensemble d'au moins un bloc comportant chacun une mémoire (30) du type précité, à laquelle sont rattachés les moyens de traitement précités tandis qu'il est prévu un seul organe d'adressage et de séquencement (40) pour chaque bloc.

3. Dispositif d'autocorrélation selon la revendication 2 comportant au moins deux blocs, caractérisé en ce que la troisième entrée (EN) des moyens de traitement rattachés à un premier bloc reçoit l'échantillon d'entrée et en ce que la troisième entrée (EN) des moyens de traitement rattachés à un bloc suivant est connectée à la première sortie (EOUT) de la mémoire du premier bloc.

4. Dispositif d'autocorrélation selon l'une des revendications 1 à 3, caractérisé en ce qu'il est prévu un circuit de lecture (85) pour prélever les différentes valeurs d'autocorrélation contenues dans la ou lesdites mémoires (30).

5. Dispositif d'autocorrélation selon l'une des revendications 1 à 3, caractérisé en ce que l'échantillon est codé sur un seul élément binaire (b = 1) indiquant son signe.

6. Dispositif d'autocorrélation selon la revendication 5, caractérisé en ce qu'il est prévu une entrée pour un code MODE aux organes de multiplication (50) pour affecter selon un premier mode la valeur "1" au résultat de la multiplication pour deux échantillons de même valeur de signe et la valeur "0" pour deux échantillons de signes différents et pour affecter, selon un deuxième mode, la valeur "1" au résultat de la multiplication pour deux échantillons de même valeur de signe et la valeur "-1" pour deux échantillons de signes différents.

## Claims

1. Auto-correlation arrangement for producing N auto-correlation values R(k) (k = 0, ...N-1) of an auto-correlation function of a sequence of digital samples x(n) (n = $-\infty$ , ..., 0, ...p) of an input signal, encoded as words of "b" bits, each value R(k) being defined by the formula:

$$R(k) = \sum_{n=p-M+1}^{n=p} x(n) \cdot x(n-k)$$

where M is the number of samples on the basis of which each value R(k) is to be determined, this arrangement comprising at least one autocorrelator block (BL0, ..., BL7), each block comprising:

- a random access memory for storing there at respective addresses a plurality of words, where each word of this memory is the concatenation of a word representing an autocorrelation value and a word representing the value of a sample, this memory having a first input (EIN) and a first output (EOUT) for sample words and a second input (RIN) and a second output (ROUT) for auto-correlation words, and

- a processing means having a first and a second input coupled to said first (EOUT) and second (ROUT) outputs respectively, of said memory, a third input (EN) for receiving sample words, a carry input (ECA), first and second outputs coupled to said first (EIN) and second (RIN) inputs of the memory, and a carry output (SCA), where the carry input of the first autocorrelator block receives the sample and where the carry input of each next autocorrelator block is connected to the carry output of the preceding autocorrelator block, the first input of the processing means being connected to the carry output (SCA), this processing means comprising a multiplier (50), an adder (60) and a dual input change-over switch (70), the inputs of the change-over switch being connected to the first input of the processing means and to the carry input (ECA), the output of the change-over switch being connected to an input of the multiplier (50) and to the first input of the memory, the multiplier (50) multiplying the sample words received at the third input of the processing means by the sample words at the output of the change-over switch (70) and the adder adding the products at the output of the multiplier to the auto-correlation words received from the second output of said memory so as to determine additional auto-correlation words, these additional auto-correlation words being applied by the adder unit to the second input of the memory to be stored there,
said arrangement further including:

- a memory addressing and sequencing element (40) for applying the sample words to the carry input (ECA) of the first autocorrelator block and to the third input (EN) of said processing means of each block, this addressing and sequencing element applying cycles for read and write addresses to said memory of each block for storing and reading there sample words and auto-correlation words in accordance with above formula, whereas the values R(k) are stored in the memory of each block and can be read out through the second output (ROUT), said second output of the memory of each block being the output of said auto-correlation arrangement.

2. Auto-correlation arrangement as claimed in Claim 1,
characterized in that it is constituted by an assembly of at least one autocorrelator block comprising a memory (30) of the above-defined type, to which the above processing means is connected and includes a single addressing and sequencing element (40) for each block.

3. Auto-correlation arrangement as claimed in Claim 2, comprising at least two autocorrelator blocks, characterized in that the third input (EN) of the processing means connected to a first autocorrelator block receives the input sample and in that the third input (EN) of the processing means connected to a next autocorrelator block is connected to the first output (EOUT) of the memory of the first autocorrelator block.

4. Auto-correlation arrangement as claimed in one of the Claims 1 to 3, characterized in that a read circuit (85) is provided for taking off the different auto-correlation values contained in said memory or memories (30).

5. Auto-correlation arrangement as claimed in one of the Claims 1 to 3, characterized in that the sample is coded with one single bit (b = 1) indicating its sign.

6. Auto-correlation arrangement as claimed in Claim 5,
characterized in that an input is provided for applying a MODE code to the multiplying members (50) for assigning, in accordance with a first mode, the value "1" to the result of the multiplication for two samples of the same signs and the value "0" for two samples of different signs and for assigning, in accordance with a second mode, the value "1" to the result of the multiplication for two samples of the same signs and the value "-1" for two samples of different signs.

**Patentansprüche**

1. Autokorrelationsanordnung zum Liefern von N Autokorrelationswerten R(k) (k = 0, ...,N-1) einer Autokorrelationsfunktion für eine Folge digitaler Abtastwerte x(n) (N = -∞, .., 0, ...p) eines Eingangssignals, die mittels "b" Binärelemente codiert sind, wobei jeder Wert R(k) durch die Formel:

$$R(K) = \sum_{n=p-M+1}^{n=p} x(n).x(n-k)$$

definiert wird, wobei M die Zahl der Abtastwerte ist, von denen ausgehend jeder Wert R(k) bestimmt werden soll, wobei diese Einrichtung mindestens einen Block (BL0,..,BL7) enthält, wobei jeder Block die nachfolgenden Elemente aufweist:

- einen Speicher mit wahlfreiem Zugriff um darin an den jeweiligen Adressen eine Anzahl Wörter zu speichern, wobei jedes Wort dieses Speichers die Verkettung eines Wortes ist, das einen Autokorrelationswert repräsentiert, mit einem Wort, das einen Abtastwert repräsentiert, wobei dieser Speicher mit einem ersten Eingang (EIN) und einem ersten Ausgang (EOUT) für Abtastwörter und mit einem zweiten Eingang (RIN) und einem zweiten Ausgang (ROUT) für Autokorrelationswörter versehen ist, und
- Verarbeitungsmittel mit einem ersten und einem zweiten Eingang, die mit dem erwähnten ersten (EOUT) bzw. zweiten Ausgang (ROUT) des erwähnten Speichers gekoppelt sind, mit einem dritten Eingang (EN) für den Empfang von Abtastwörtern, mit einem Übertragungseingang (ECA), mit einem ersten und einem zweiten Ausgang, die mit dem erwähnten ersten (EIN) bzw. zweiten Eingang (RIN) des Speichers gekoppelt sind, sowie mit einem Übertragungsausgang (SCA), wobei der Übertragungseingang des ersten Blocks den Abtastwert empfängt und der Übertragungseingang jedes folgenden Blocks mit dem Übertragungsausgang des vorhergehenden Blocks verbunden ist, wobei der erste Eingang der Verarbeitungsmittel an den Übertragungsausgang (SCA) angeschlossen ist, wobei diese Verarbeitungsmittel einen Multiplizierer (50), einen Addierer (60) und einen Umschalter (70) mit zwei Eingängen aufweisen, wobei die Eingänge des Umschalters an den ersten Eingang der Verarbeitungsmittel und an den Übertragungseingang (ECA) angeschlossen sind, wobei der Ausgang des Umschalters an einen Eingang des Multiplizierers (50) und an den ersten Eingang des Speichers angeschlossen ist, wobei der Multiplizierer (50) die am dritten Eingang der Verarbeitungsmittel empfangenen Abtastwörter mit den Abtastwörtern am Ausgang des Umschalters (70) multipliziert und der Addierer die Produkte am Ausgang des Multiplizierers zu den Autokorrelationswörtern addiert, die am zweiten Ausgang des erwähnten Speichers empfangen worden sind, um die zusätzlichen Autokorrelationswörter zu bestimmen, wobei diese zusätzlichen Autokorrelationswörter von dem erwähnten Addierer dem zweiten Eingang des Speichers geliefert werden, um dort gespeichert zu werden,
  wobei die erwähnte Einrichtung außerdem die folgenden Elemente aufweist:
- ein Speicheradressierungs- und -ordnungselement (40) zum Liefern der Abtastwörter an den Übertragungseingang (ECA) des ersten Blockes und an den dritten Eingang (EN) der erwähnten Verarbeitungsmittel jedes Blocks, wobei dieses Speicheradressierungs- und -ordnungselement Lese- und Schreibadreßzyklen an den erwähnten Speicher jedes Blockes liefert, um darin Abtastwörter und Autokorrelationswörter entsprechend der obigen Formel zu speichern und zu lesen, während die Werte R(k) im Speicher jedes Blockes gespeichert werden und am zweiten Ausgang (ROUT) ausgelesen werden können, wobei der erwähnte zweite Ausgang des Speichers jedes Blockes der Ausgang der erwähnten Autokorrelationsanordnung ist.

2. Autokorrelationsanordnung nach Anspruch 1, dadurch gekennzeichnet, daß sie aus einem Gefüge von mindestens einem Block besteht, die je einen Speicher (30) des obenerwähnten Typs aufweisen, mit dem die obenerwähnten Verarbeitungsmittel verknüpft sind, während für alle Blöcke nur ein einziges Speicheradressierungs- und -ordnungselement (40) vorgesehen ist.

3. Autokorrelationsanordnung nach Anspruch 2 mit mindestens zwei Blöcken, dadurch gekennzeichnet, daß der dritte Eingang (EN) der Verarbeitungsmittel, die mit einem ersten Block verknüpft sind, den Abtastwert des Eingangs empfängt und daß der dritte Eingang (EN) der Verarbeitungsmittel, die mit einem folgenden Block verknüpft sind, mit dem ersten Ausgang (EOUT) des Speichers des ersten Blocks verbunden ist.

4. Autokorrelationsanordnung nach einem der Ansprüche 1 bis 3, dadurch gekennzeichnet, daß eine Leseschaltung (85) vorgesehen ist, um die verschiedenen Autokorrelationswerte abzulesen, die in dem oder den erwähnten Speichern (30) enthalten sind.

5. Autokorrelationsanordnung nach einem der Ansprüche 1 bis 3, dadurch gekennzeichnet, daß der Abtastwert mit einem einzigen das Vorzeichen desselben bezeichnenden Binärelement (b = 1) codiert ist.

6. Autokorrelationsanordnung nach Anspruch 5, dadurch gekennzeichnet, daß bei den Multiplizierern (50) ein Eingang für einen Code MODE vorgesehen ist, um gemäß einem ersten Modus dem Ergebnis der Multiplikation für zwei Abtastwerte desselben Vorzeichens den Wert "1" und für zwei Abtastwerte mit unterschiedlichem Vorzeichen den Wert "0" zuzuordnen, und um gemäß einem zweiten Modus dem Ergebnis der Multiplikation für zwei Abtastwerte desselben Vorzeichens den Wert "1" und für zwei Abtastwerte mit unterschiedlichem Vorzeichen den Wert "-1" zuzuordnen.

FIG1

FIG. 2

14

FIG.3

FIG.4

FIG.5

EP 0 215 497 B1

FIG.6

EP 0 215 497 B1

FIG. 7